## Europäisches Patentamt
## European Patent Office
## Office européen des brevets

(19)

(11) Publication number: **0 011 962**
A1

(12)

# EUROPEAN PATENT APPLICATION

(21) Application number: **79302562.8**

(22) Date of filing: **13.11.79**

(51) Int. Cl.³: **B 65 G 15/02**

(30) Priority: **28.11.78 GB 4631078**

(43) Date of publication of application:
**11.06.80 Bulletin 80 12**

(84) Designated Contracting States:
**BE CH DE FR IT NL SE**

(71) Applicant: PORTEC (U.K.) LIMITED
Vauxhall Industrial Estate Ruebon
Wrexham Clwyd., Wales(GB)

(72) Inventor: Davies, George
73, Berwyn View
Ellesmere, Salop(GB)

(72) Inventor: Twigg, Christopher James Stewart
77, Oaklands Road
Chirck Bank Chirk, Clwyd., North Wales(GB)

(74) Representative: Bedggood, Guy Stuart et al,
Haseltine Lake & Co. Hazlitt House 28 Southampton
Buildings Chancery Lane
London WC2A 1AT(GB)

(54) A belt conveyor with a curved travel path.

(57) The belt conveyor has an endless belt with an upper run 10 which extends around a flat, part-circular bend or a helical path, and a lower run 11 which extends below the upper run, and end deflection rollers 12, 13 which each comprise two or more coaxial, constant-diameter cylindrical portions 40 of equal diameter which are rotatable at mutually different speeds to accommodate the different peripheral speeds across the belt substantially without slip between the belt and rollers. Drive means may comprise a chain 16 attached to the radially outer edge of the belt and a drive sprocket 30, the chain being constrained to maintain its curved path to prevent the belt moving radially inwardly. The diameter of the end deflection rollers is independent of the curvature or width of the conveyor path.

EP 0 011 962 A1

Fig.I.

## A BELT CONVEYOR WITH A CURVED TRAVEL PATH

This invention relates to a belt conveyor having an endless conveyor belt with a path of travel which is curved relative to a generally vertical axis, for conveying objects around a flat bend or along a helical path.

Known belt conveyors having such curved paths of travel employ conically tapered rollers at the end regions where the belt is deflected upwards or downwards between the upper and lower runs of the endless belt, the larger diameter portions of the conically tapered deflection rollers contacting radially outer portions of the belt thereby to accommodate the higher peripheral speeds of the belt at its radially outer regions compared with the peripheral speeds at radially inner regions of the belt.

There is also a known belt conveyor having a curved path of travel around a flat bend with parallel end rollers, i.e. end rollers of constant diameter, but the end rollers are each in one piece and hence there is slip between the rollers and the belt, the slip being progressively greater at points located progessively farther inwards and outwards from the neutral point, at about the mid-point of the width of the belt, across the belt in directions radially of the bend, i.e. generally axially of the rollers.

According to the present invention there is provided a belt conveyor having a curved path of travel, comprising an endless conveyor belt having an upper run for conveying objects, which follows a generally horizontal generating line rotating about a generally vertical axis, and a lower run which extends below the upper run, deflection rollers arranged to guide the belt at regions of upward or downward deflection of the path of the belt, drive means for driving the belt and means for constraining the belt to maintain its curved path, at least one of the deflection rollers comprising two or more coaxial, constant-diameter cylindrical portions of equal diameter which are rotatable at mutually different speeds.

The upper run of the belt may be arranged to extend around a flat, part-circular bend, the arcuate conveying surface lying in a horizontal plane, or the upper run of the belt may be arranged to extend helically relative to the generally vertical axis, for conveying objects between upper and lower axially spaced locations.

Advantageously, in either the flat or helical belt configurations, one or each of the deflection rollers at the beginning and at the end of the upper run of the belt, for guiding the belt between the upper and lower runs, comprises a plurality of coaxial, constant-diamater cylindrical portions of equal diameter which are rotatable at mutually different speeds. Such end deflection rollers may for example comprise a plurality of cylindrical roller portions arranged freely rotatably on a shaft; the roller portions are preferably made of low-friction plastics material. The roller portions may lie directly next to each other; alternatively, it would be possible to have spacers between adjacent roller portions.

In another embodiment of the invention, a deflection roller constituting a belt tensioning or take-up roller comprises a plurality of coaxial, constant-diameter cylindrical portions of equal diameter which are rotatable at mutually different speeds, the tensioning or take-up roller being mounted for bodily displacement in directions perpendicular to the surface of the belt, for varying the belt path thereby to tension, or take-up slack in, the belt.

The drive means for the belt preferably comprises an endless chain connected to the radially outer edge of the belt, and a drive sprocket for driving the chain, the chain running along a guide which constrains it and the belt from moving radially inwardly. The drive sprocket is conveniently mounted fast on the shaft on which the cylindrical portions of one of the end deflection rollers, preferably that at the downstream end of the upper run of the belt, are freely rotatably mounted, the shaft being driven by a drive motor; in this case the diameter of the cylindrical portions making up the deflection roller should be approximately equal to the pitch circle diameter of the drive sprocket. If the belt is to be driven in one direction only then at the end deflection roller at the non-driving end a non-driving sprocket is provided on the deflection roller shaft to guide the chain between its upper and lower runs.

If the belt is to be driven in each direction, respective drive sprockets may be provided on each of the shafts of the deflection rollers at each end of the upper run of the belt; this is because it is preferred always to provide the drive so as to pull the upper run, i.e. that which will be loaded with objects to be conveyed, by driving the belt at the downstream end of the upper run of the belt.

The invention may be put into practice in a number of ways but two specific embodiments will now be described, by way of example only, with reference to the accompanying drawings in which:-

Figure 1 is a plan view of a flat, part-circular belt conveyor in accordance with the invention;

Figure 2 is a detailed end view taken on the line II-II of Figure 1;

Figure 3 is a view taken on the lines III-III of Figure 1, showing a take-up roller;

Figure 4 is a view taken on the lines IV-IV of Figure 1, showing a tensioning roller;

Figure 5 is a view taken on the lines V-V of Figure 4; and

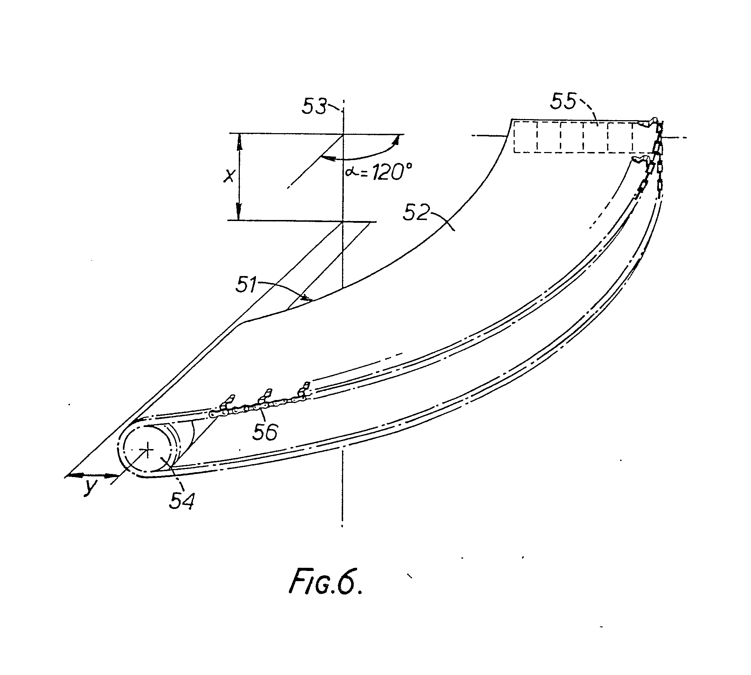

Figure 6 is a diagrammatic perspective view of a helical belt conveyor in accordance with the invention.

-4-

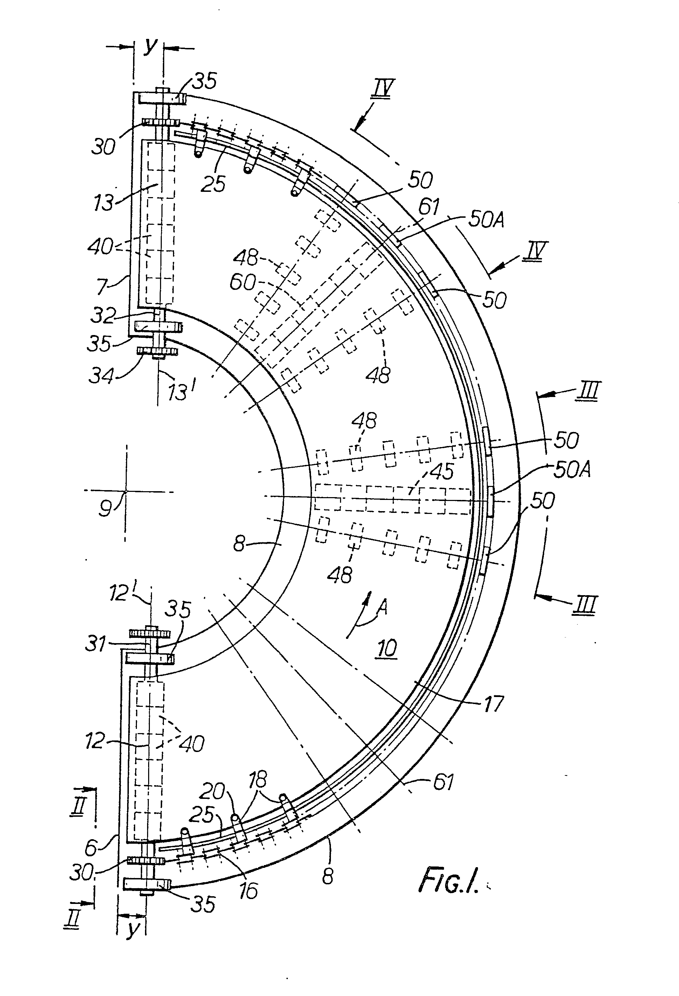

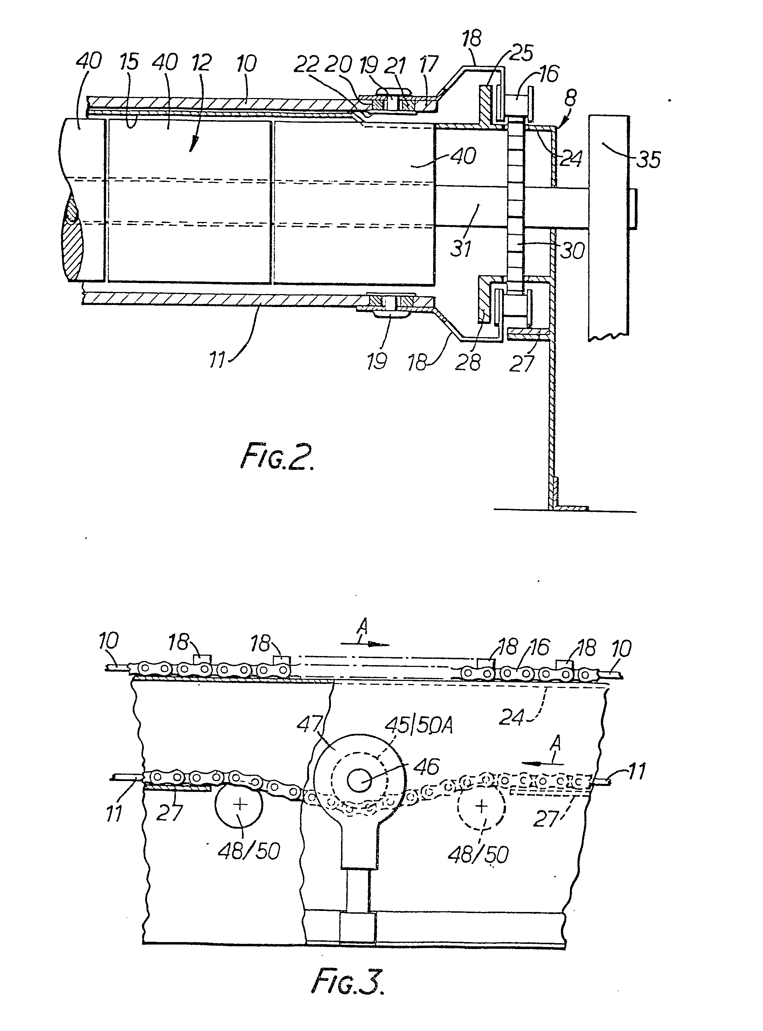

Figures 1 to 3 show a belt conveyor having path of travel which curves around a flat bend, in a horizontal plane, through 180° about a vertical axis 9. The conveyor comprises an arcuate frame 8 extending around a bend between its ends 6 and 7 and supporting an endless belt having an upper run 10 on which objects to be conveyed are carried around the part-circular bend of constant radius, and a lower run 11 which extends below the upper run. At each end of the upper run 10 the belt passes over end deflection rollers 12 and 13 mounted on the frame 8, the belt being wrapped around these rollers to guide its path from the lower run up to the upper run and vice versa. Between the end deflection rollers 12 and 13, below the upper run 10 of the belt is a bed 15 (see Figure 2) over which the belt slides; the bed 15 which forms part of the frame 8 supports the weight of the objects of the upper run 10 of the belt, the belt having a low-friction backing which facilitates sliding on the bed.

For driving the belt around its arcuate travel path, there is provided an endless chain 16 connected to the radially outer peripheral edge 17 of the belt by means of a series of tongues 18 fixed to one side of the chain 16 at uniformly spaced intervals therealong, the tongues 18 projecting radially inwards over the edge 17 of the belt and carrying respective rivets 19 which extend through respective holes 20 formed by grommets lined with small nylon bushes 21, in the belt edge 17, and which have discs 22 below the belt. The rivets 19 afford pivot connections between the tongues 18 and the belt.

As shown in Figures 1 and 2, the chain 16 runs around an arcuate guideway, the centre of curvature of which is the axis 9, formed by an underneath guide 24 and a lateral guide 25 disposed on the radially inner side of the chain 16 thereby to prevent the chain 16 and the belt from moving radially inwardly and therefore constraining the belt to move around the arcuate path. As seen in Figure 2, the tongues 18 are of cranked shape so that they bridge the lateral guide 25 without touching it.

On the lower run 11 of the belt, the associated lower run of the chain 16 is supported by a lower support 27 and a lower lateral guide 28 again disposed radially inwardly of the chain 16. It will be appreciated that the chain 16 necessarily has suitably loosely interconnected links to enable it to extend around the arcuate edge 17 of the belt.

At each end of the conveyor the chain 16 passes over a sprocket 30 keyed fast to the shafts 31, 32 of the respective end deflection rollers 12 and 13. For driving the belt in the direction indicated by arrows A in Figures 1 and 3, the shaft 32 of the deflection roller 12 at the downstream end of the upper run 10 carries at its end at the radially inner side of the belt a further sprocket 34 connected to a drive motor not shown; the sprocket 34 may of course be on the end of the shaft 31 at the radially outer side of the belt. The sprocket 34 may of course be driven by any suitable drive means. The shafts 31 and 32 are mounted for rotation about fixed-position axes in bearing blocks 35 at each end thereof, mounted on the frame 8.

Hitherto it has been thought to be necessary, to avoid excessive slip between the belt and the end deflection rollers, for the end deflection rollers 12 and 13 to be conically tapered to accommodate the different surface speeds of the belt at different radial positions across its width. Such conically tapered rollers had to have a specific taper appropriate to the radius of the arc of the travel path of the belt.

In accordance with the invention, the end deflection rollers 12 and 13 are not tapered but each comprises a plurality of coaxial constant-diameter cylindrical portions 40 which are all of the same diameter, making up a composite parallel-cylindrical roller. For the case where, as shown, the chain 16 lies directly alongside the radially outer edge of the belt, the diameter of the deflection rollers 12 and 13 should be approximately equal to the pitch circle diameter of the sprockets 30. The cylindrical roller portions 40 are made of a low-friction plastics material and are freely rotatably mounted on the shafts 12 and 13 directly next to each other. The cylindrical roller portions 40 are able to rotate at mutually different speeds and are thereby able to rotate at the appropriate speed corresponding to the surface speed of the belt at the respective contacting region, across the width of the belt. Furthermore, since the belt is driven independently of the rollers 12 and 13 the friction between the back face of the belt and each roller portion 40 may be made as low as possible. For example, the belt may be made of a heavy duty plastics material having a hard-wearing upper surface and a synthetic fabric providing a low-friction surface on its back face.

As shown in Figure 1, the shafts 31 and 32, and hence the axes 12' and 13' of the end deflection rollers 12 and 13, are not radially arranged relative to the vertical axis 9 but they are offset from, and are parallel to, a radius from the axis 9 in line with the respective end 6, 7 of the frame 8; the axes 12' and 13' are offset from that radius by a distance $y$ as indicated. This distance $y$ by which the axes 12' and 13' are offset towards the bend of the conveyor should be approximately $\frac{\pi d}{4}$ where $d$ is the diameter of each end deflection roller 12, 13, i.e. approximately one quarter of the circumference of the rollers. In a specific construction with end rollers of 65 mm diameter the spacing $y$ was 50 mm. The total belt length including the upper and lower runs 10 and 11 and the wrap around each end deflection roller 12 and 13 is approximately equal to twice the arcuate length between the ends 6, 7 of the frame 8.

Whilst Figure 1 shows a bend of 180$^{\mathrm{O}}$ so that the axes 12' and 13' are in line, the same amount of offset $y$ of the axes of the end rollers 12 and 13 from the radii centred on the axis 9, at the frame ends 6 and 7, applies with other angles of bend. The angle between the axes of the rollers 12 and 13 will always be the same as the angle between the radii at the frame ends 6 and 7.

It will be appreciated that the diameter of the deflection rollers 12 and 13 is independent of the radius and angle of the arc of the travel path of the belt so that such rollers can be uniformly mass-produced ready for many different sizes and curvature of belt conveyors; in the embodiment illustrated, the diameter of the individual cylinder roller portions 40 is approximately equal to its axial length but this relationship is not essential. For different width of belt conveyors, all that is required is to choose the appropriate number of roller portions to make up the required axial length of roller to suit the belt width. The axial length of each individual roller portion 40 and hence the number of cylindrical roller portions 40 required to make up a deflecting roller 12 and 13 of predetermined length depends on the width of the belt and other factors such as the load to be transported and the friction between the belt and rollers. Preferably, there are at least five or six cylindrical roller portions 40 making up each end deflection roller 12, 13, and in many cases ten or more such roller portions will be appropriate. A further advantage of using parallel-cylindrical end deflection rollers is that the tendency for the belt to move radially inwardly as it travels around is less than when conically tapered end rollers are used because with the latter the belt tends to move 'down' the taper to the smaller ends of the rollers.

For tensioning the belt a tensioning roller 45 (Figures 1 and 3) is provided in contact with the upper surface of the lower run 11 of the belt, the shaft 46 of which is carried in bearing blocks 47 which are displaceable by a screwthreaded mounting, in directions perpendicular to the belt. The tensioning roller 45 is situated mid-way around the bend and is located between two sets of snub rollers 48 disposed below the lower run 11 of the belt.

Furthermore, situated respectively mid-way between each of the end deflection rollers 12 and 13 and the tensioning roller 45 are two take-up rollers 60 also disposed in contact with the lower run 11 of the belt; each take-up roller 60 is also located between two sets of snub rollers 48 disposed below the lower run 11 of the belt. The take-up rollers 60 are also each adjustable up and down; however, in this case the shafts 61 on which they are carried are not mounted in bearing blocks but each shaft end is drilled and tapped with an axially extending hole 62 (see Figure 5) into which is screwed a screw 63 the socket head of which is located on the outside of the frame 8 with the screw shank passing through a respective, vertically-arranged slot 64 in the frame. With the screw 63 at each end loose each shaft 61 can be moved up and down as required and it can be secured in any set position by tightening the screws so that each screwhead presses via a washer against the frame. The rollers 60 are freely rotatable on their shafts 61 which are, of course, always stationary.

The tensioning roller 45 and the take-up rollers 60 are each of a similar construction to that of the end deflection rollers 12 and 13, their individual cylindrical roller portions rotating at mutually different speeds depending on their radial positions across the width of the belt. The end regions of the shafts of the tensioning roller 45, of the take-up rollers 60, and of the snub rollers 48 at the radially outer side of the belt each carry a plastics runner 50 or 50A, over which the chain 16 runs so that the chain 16 is also tensioned; the runners 50A are flanged to keep the chain on its arcuate path. Furthermore, to support the lower run 11 of the belt there are sets of support rollers (not shown) to prevent the lower run 11 from sagging.

In use, when the belt conveyor is first put into operation, the take-up rollers 60 and the tensioning roller 45 are positioned so as to be virtually inoperative. As the chain 16 wears and the belt stretches, the tensioning roller 45 is adjusted from time to time to press down onto the lower run 11 of the belt to tighten it and the chain. When the limit of adjustment of the tensioning roller 45 is reached, it is returned to its original position and the slackness is taken up by moving the two take-up rollers 60. Further wear and stretch is then again taken by adjustment of the tensioning roller 45.

Of course, on certain smaller turns, no take-up roller system is used at all, and instead just one tensioning roller system is used located mid-way round the bend or nearer to one of the end deflection rollers as required. Such a single tensioning roller system may be adjustable in the same way as illustrated for the take up rollers 60 or by an adjustable bearing block like that of the tensioning roller 45.

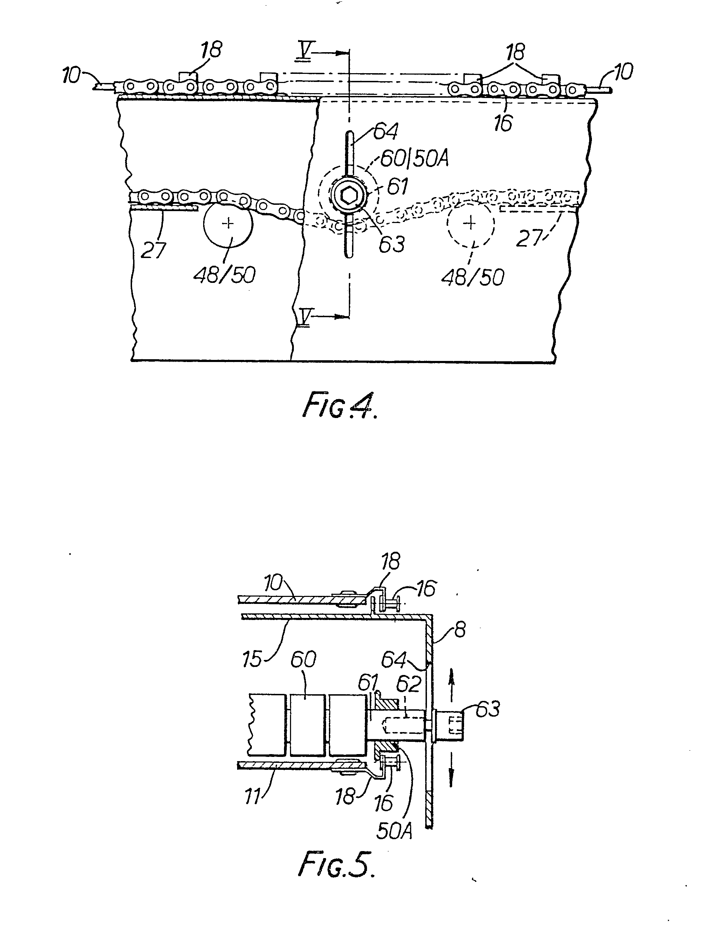

The embodiment shown in Figure 4 is a belt conveyor with a helical travel path of constant radius, the belt 51 having an upper surface 52 which follows a generally horizontal generating line rotating about a vertical axis 53 through an angle $\alpha$ with an axial displacement X. The end rollers 54, 55 are of identical construction to that of the end deflection rollers of the embodiment shown in Figures 1 to 3, i.e. parallel-cylindrical rollers made up of a plurality of constant-diameter roller portions. Moreover, as with the first embodiment the axes of the rollers 54, 55 are parallel to and offset from the radii centred on the axis 53 at the ends of the frame. In this embodiment the bed, not shown, on which the upper run 52 of the endless belt slides, is correspondingly helical, and the drive chain 56 which is connected to the radially outer edge of the belt in the same manner as that in the first described embodiment, runs along similarly helically formed guides (not shown) extending alongside the outer edges of the upper and lower runs of the belt.

In the embodiment illustrated, the belt travel path extends around an angle $\alpha$ of $120^{\circ}$ as viewed in plan. The steepness of the conveyor is determined according to the particular requirement of the vertical displacement X for a given angle $\alpha$. Clearly, the loading surface of the belt may have to have a friction coating to prevent objects sliding down the belt. If a greater height and angle of curvature of the travel path is required then a plurality of such belt conveyors can be arranged in series, though of course each conveyor may itself extend around more than $120^{\circ}$. However, by providing a plurality

0011962

of such conveyors, in series rather than one long conveyor, replacement of worn belts is easier and because each belt is shorter it is easier to make than one long belt.

The belt is, as before, driven at its upper end so as to pull the carrying, i.e. loaded, run of the belt. Drive may be provided at each end of belt if travel in each direction as required. Belt tension is adjusted by a tensioning roller and take-up roller system (not shown) in the same manner as in the first described embodiment. This is particularly advantageous with the helical conveyor since adjustment of belt tension by varying the position of the end deflection rollers, as has been proposed in known conically tapered roller arrangements, necessarily varies the positions of the take-on and delivery ends of the conveyor which may necessitate positional adjustment of adjacent equipment.

CLAIMS

1.   A belt conveyor having a curved path of travel,
comprising an endless conveyor belt having an upper run for
conveying objects, which follows a generally horizontal
generating line rotating about a generally vertical axis,
and a lower run which extends below the upper run,
deflection rollers arranged to guide the belt at regions
of upward or downward deflection of the path of the belt,
drive means for driving the belt and means for constraining
the belt to maintain its curved path, at least one of the
deflection rollers comprising two or more coaxial,
constant-diameter cylindrical portions of equal diameter
which are rotatable at mutually different speeds.

2.   A belt conveyor as claimed in claim 1, in which
one or each of the deflection rollers at the beginning
and at the end of the upper run of the belt, for guiding
the belt between the upper and lower runs, comprises
a plurality of coaxial, constant-diameter cylindrical
portions of equal diameter which are rotatable at mutually
different speeds.

3.   A belt conveyor as claimed in claim 1, in which there
is a deflection roller constituting a belt tensioning
roller comprises a plurality of coaxial, constant-diameter
cylindrical portions of equal diameter which are rotatable
at mutually different speeds, the tensioning roller
being mounted for bodily displacement in directions
perpendicular to the belt, for varying the belt path thereby
to tension the belt.

4.   A belt conveyor as claimed in any one of claims 1
to 3, in which the or each deflection roller comprises
a plurality of cylindrical roller portions arranged freely
rotatably on a shaft.

5.   A belt conveyor as claimed in claim 4, in which there
are at least five cylindrical roller portions in the or
each deflection roller and preferably ten or more such
roller portions.

6.   A belt conveyor as claimed in claim 4 or claim 5,
in which the cylindrical roller portions are made of low-friction

plastics material.

7.   A belt conveyor as claimed in any one of claims 4 to 6, in which the cylindrical roller portions lie directly adjacent each other with no spacers therebetween.

8.   A belt conveyor as claimed in any one of claims 1 to 7, in which the upper run of the belt is adapted to extend around a flat, part-circular bend, with the arcuate conveying surface lying in a horizontal plane.

9.   A belt conveyor as claimed in any one of claims 1 to 7, in which the upper run of the belt is adapted to extend helically relative to the generally vertical axis, for conveying objects between upper and lower axially-spaced locations.

10.   A belt conveyor as claimed in any one of the preceding claims, in which the drive means for the belt comprises an endless chain connected to the radially outer edge of the belt, and a drive sprocket for driving the chain, the chain running along a guide which constrains it and the belt from moving radially inwardly.

11.   A belt conveyor as claimed in claim 9 when dependant on claim 2, in which the drive sprocket is mounted fast on the shaft on which the cylindrical portions of one of the end deflection rollers are freely rotatably mounted, the shaft being driven by a drive motor and the diameter of the cylindrical portions making up the deflection roller are approximately equal to the pitch circle diameter of the drive sprocket.

12.   A belt conveyor as claimed in claim 10, in which respective drive sprockets are provided on each of the shafts of the deflection rollers at each end of the upper run of the belt whereby the belt can be driven in either direction as required with the appropriate one of the drive sprockets operative so as to drive the belt at the downstream end of the upper run of the belt.

Fig.I.

Fig.2.

Fig.3.

0011962

Fig.4.

Fig.5.

Fig.6.

| DOCUMENTS CONSIDERED TO BE RELEVANT | | | CLASSIFICATION OF THE APPLICATION (Int. Cl.) 3 |
|---|---|---|---|
| Category | Citation of document with indication, where appropriate, of relevant passages | Relevant to claim | B 65 G 15/02 |
| | DE - A - 2 020 434 (BRUHM) <br> + Pages 5-8; fig. 1,3 + <br> -- | 8,10 | |
| | DE - A - 2 055 682 (BRUHM) <br> + Pages 4-7; fig. 1,3 + <br> -- | 8,10 | |
| | DE - B - 2 221 677 (TROCKEN TECHN.) <br> + Columns 3-6; fig. 2,3 + <br> -- | 1,3, 8,10-12 | |
| X | CH - A - 484 801 (MONHEIM) <br> + Columns 3-6; fig. 1,2 + <br> -- | 1-5,7, 8,10-12 | TECHNICAL FIELDS SEARCHED (Int.Cl.) 3 <br><br> B 65 G 15/00 |
| X | CH - A - 599 890 (BÜHRER) <br> + Columns 1-3; fig. 1,2 + <br> ---- | 1-5,7, 8,10-12 | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| X | The present search report has been drawn up for all claims | |
|---|---|---|
| Place of search <br> VIENNA | Date of completion of the search <br> 29-01-1980 | Examiner <br> BEDNAR |

EPO Form 1503.1   06.78